(19) Europäisches Patentamt / European Patent Office / Office européen des brevets

(11) **EP 4 428 762 A1**

(12) **EUROPEAN PATENT APPLICATION**

(43) Date of publication:
**11.09.2024 Bulletin 2024/37**

(21) Application number: **23160419.0**

(22) Date of filing: **07.03.2023**

(51) International Patent Classification (IPC):
**G06N 3/096** $^{(2023.01)}$     **G06N 7/01** $^{(2023.01)}$

(52) Cooperative Patent Classification (CPC):
**G06N 3/096; G06N 7/01;** G06N 3/0455;
G06N 3/0464; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Khoreva, Anna
70197 Stuttgart (DE)**
• **Li, Yumeng
72070 Tuebingen (DE)**
• **Zhang, Dan
71229 Leonberg (DE)**

(54) **DETERMINING WHETHER A GIVEN INPUT RECORD OF MEASUREMENT DATA IS COVERED BY THE TRAINING OF A TRAINED MACHINE LEARNING MODEL**

(57) A method (100) for detecting whether a given input record (2) of measurement data that is inputted to a trained machine learning model (1) is in the domain and/or distribution (2a#) of training examples (2a) with which the machine learning model (1) was trained, comprising the steps of:
• determining (110), from each training example (2a), a training style (4a) that characterizes the domain and/or distribution (2a#) to which the training example (2a) belongs;
• determining (120), from the given input record (2) of measurement data, a test style (4) that characterizes the domain and/or distribution to which the given record (2) of measurement data belongs;
• evaluating (130), based on the training styles (4a) and the test style (4), to which extent (5) the test style (4) is a member of the distribution (4a#) of the training styles (4a); and
• based at least in part on the outcome (5) of this evaluation, determining (140) whether the given (2) record of measurement data is in the domain and/or distribution (2a#) of the training examples (2a).

Fig. 1b

Fig. 1a

EP 4 428 762 A1

# Fig. 1a

Fig. 1b

## Description

The present invention relates to the evaluation of measurement data by means of trained machine learning models.

Background

In many applications, such as the steering of autonomous vehicles or robots on premises or even in public road traffic, or in quality assurance checking, measurement data are processed using trained machine learning models. In particular, machine learning models are advantageous for the processing of image data from cameras, as well as point cloud data from radar or lidar sensors. Even if two records of such measurement data of any given scene are captured in immediate succession, they will not be identical. This is less of a problem when a trained machine learning model is used for the processing, due to the power of machine learning models to generalize over the training data set on which they were trained.

However, the power to generalize is inherently limited to the domain and/or distribution to which the training data set belongs. If the machine learning model encounters records of measurement data from a too different domain and/or distribution, its output may be less accurate.

Disclosure of the invention

The invention provides a method for detecting whether a given input record of measurement data that that is inputted to a trained machine learning model is in the domain and/or distribution of training examples with which the machine learning model was trained.

In particular, the term "machine learning model" comprises any function with a high power to generalize that is adaptable by means of parameters which characterize its behavior. For example, the machine learning model may comprise one or more neural networks. The parameters may, for example, comprise weights with which inputs to neurons are summed to an activation of this neuron.

Generally speaking, a record of measurement data can be considered to have a content and a style. The content corresponds to the semantic information of the record. When the record is processed by the machine learning model that has been trained for a particular given task, this semantic information is evaluated with respect to the given task. For example, if the record of measurement data is an image, and the task is classification of objects in the image, the objects visible in the image are the semantic content. The style, on the other hand, can be considered to be a manner in which the semantic content is rendered into the record of measurement data (e.g., the image). For example, the style may comprise one or more rules or transfer functions for rendering the semantic content into a record of measurement data.

In the course of the method, from each training example, a training style is determined. This training style can be considered to characterize the domain and/or distribution to which the training example belongs. For example, if the records of measurement data are images, the style may characterize the season (e.g., summer or winter) or the time of day (e.g., day or night) at which the image was taken.

Likewise, from the given input record of measurement data, a test style that characterizes the domain and/or distribution to which the given record of measurement data belongs is determined.

The training styles obtained from the many training examples form a distribution. Based on the training styles and the test style, it is evaluated to which extent the test style is a member of the distribution of the training styles. Based at least in part on the outcome of this evaluation, it is determined whether the given record of measurement data is in the domain and/or distribution of the training examples. In particular, if the given record of measurement data is not in this domain and/or distribution, this may be considered as an anomaly in the context of the application in which the machine learning model is being used.

The proposed method is selectively sensitive to anomalies that affect the style of the record of measurement data. For example, in the mentioned use case of image classification, it can be expected to recognize the test style extracted from the input image to be out of the distribution of the training image if

- the machine learning model has been insufficiently trained for the time of day or season in which the input image was acquired;
- the image is overexposed or underexposed; or
- ice, dirt or other contamination on the camera lens applies a "filter" to the image.

Furthermore, it can be expected that images from a different use case or application will also have a different style. For example, an input image taken by a quality inspection system in a factory can be expected to have a style that is out-of-distribution with respect to a distribution of training styles for images of traffic situations.

On the other hand, the method can be expected not to detect an anomaly if the input image has a style that is similar to the training styles, but has merely a novel content that is not covered by the training of the machine learning model. For example, if the lawmaker has introduced a new traffic sign and this sign was not covered by the training, an image of the new sign in otherwise substantially similar conditions can still be expected to have a style that is in-distribution with respect to the training styles.

The described selective sensitivity to style changes is advantageous because it allows to narrow down anomalies to a style change as the cause. If only one method is used and this one method is sensitive to content changes, style changes and whatever other anomaly, it can only be detected that there is an anomaly of some sort, without a possibility to track down the root cause.

In a particularly advantageous embodiment, the determining of the training style, respectively of the test style, may comprise:

- processing, by a trained feature extractor network, the training example, respectively the input record of measurement data, into a feature map; and
- determining, from this feature map, features of the training example, respectively of the input record, that characterize the domain and/or distribution of the training example, respectively of the input record.

For example, a convolutional neural network may be used to produce feature maps. These feature maps may then be decomposed into

- a first contribution with features that characterize the domain and/or distribution of the training example, respectively of the input record of measurement data, as such on the one hand, and
- a second contribution with features that characterize the content of the training example, respectively of the input record of measurement data, in its domain and/or distribution on the other hand.

Here, only the first contribution is needed. For example, an encoder provided in the framework of the StyleGAN network proposed by Nvidia comprises the convolutional neural network, as well as "map2style" and "map2content" means for determining said first style contribution and said second content contribution from the feature map.

In a further particularly advantageous embodiment, the evaluating to which extent the test style is a member of the distribution of the training styles comprises:

- aggregating the training styles to form an aggregate; and
- determining to which extent the test style is a member of the distribution of the training styles based on a distance D, D' between the test style and the aggregate, and/or based on the value of a rating function R(D, D') that is dependent on the distance D, D'. For example, the rating function R(D, D') may "penalize" longer distances D, D' disproportionally more than shorter distances D, D'.

The aggregate is based on very many training examples and can therefore be deemed to represent the set of training examples with a good accuracy. A distance measure is very well motivated, and good measures are readily available.

In particular, the aggregate may comprise a parametrized statistical distribution that is fitted to the training styles. Such a distribution may, for example, have a characteristic central point or central area. A distance between this central point or central area on the one hand and the test style on the other hand is then well-defined. Likewise, a centroid of a cluster of training styles may be determined as the aggregate. This centroid defines a distance to the test style as well.

In a further particularly advantageous embodiment, the Mahalanobis distance is chosen as a measure for the distance D, D'. This measure is able to directly map a distribution of training styles on the one hand and a test style on the other hand to a distance. For example, if the distribution W of training styles is a multivariate Gaussian distribution $W \sim \mathcal{N}(\mu, \Sigma)$ with mean $\mu$ and standard deviation (covariance matrix) $\Sigma$, the Mahalanobis distance $D$ between the distribution $W$ and a given test style $\tau$ may be computed as

$$D = d(W, \tau)^2 = (W - \tau)^T \Sigma^{-1} (W - \tau).$$

For example, when this Mahalanobis distance D exceeds a predetermined threshold, the test style $\tau$ may be considered to be out-of-distribution.

In a further particularly advantageous embodiment, the evaluating to which extent the test style is a member of the distribution of the training styles may comprise:

- training, based on the training styles, a normalizing flow model for probabilistic modelling and/or density estimation of the training styles;
- querying, based on the test style, the normalizing flow model for a local density; and
- in response to determining that, according to a predetermined criterion, this local density is in a low-density region, determining that the test style is not in the domain and/or distribution of the training styles.

This avoids condensing the distribution of training styles to a single point or region of reference, thereby preserving more of the probabilistic character of the evaluating.

In a further particularly advantageous embodiment, in response to determining that the given record of measurement data is not in the domain and/or distribution of the training examples, the method is repeated with the same given input record of measurement data, but with a second machine learning model that has been trained on a second dataset of training examples. If it then turns out that the given input record of measurement data is in the domain and/or distribution of the training examples in the second dataset, it can be determined that the second machine learning model is more appropriate for processing the given input record of measurement data than the previous machine learning model. That is, it can be determined on-the-fly which of several available machine learning models is most appropriate for processing a particular record of measurement data. For example, when the environment of a vehicle or robot is monitored by one or more cameras and the images are processed by a machine learning model into a representation of the environment, there may be one generic main model and several auxiliary models for special conditions (such as nighttime or adverse weather).

In another particularly advantageous embodiment, in response to determining that the given record of measurement data is not in the domain and/or distribution of the training examples, a new record of measurement data is obtained from a sensor that is different from the sensor with which the given input record of measurement data was acquired. The method is then repeated with the same machine learning model, but with the new record of measurement data. If it then turns out that the new record of measurement data is in the domain and/or distribution of the training examples, it can then be determined that the new record of measurement data is more credible than the given record of measurement data. For example, image acquisition by means of a camera may be impeded because sunlight impinging directly on the optical axis of the camera drives the image sensor into saturation. In another example, one of several available cameras or other sensors may be impeded by dirt or ice. It can then be automatically determined on-the-fly which of the other available sensors can still be trusted.

In a further particularly advantageous embodiment, in response to determining that the given record of measurement data is not in the domain and/or distribution of the training examples, the transmission of an output that the machine learning model computes from the given record of measurement data to a downstream technical system is suppressed. Many such downstream systems can tolerate a short outage regarding the output of the machine learning model, and/or the consequences of such an outage are less problematic than the consequences of acting based upon an incorrect output of the machine learning model.

Alternatively or in combination to this, a downstream technical system that uses outputs of the machine learning model is actuated to move this technical system into an operational state where it can better tolerate noisy or incorrect outputs. In this manner, negative consequences that may arise from the use of noisy or incorrect outputs by the downstream technical system may be reduced.

In a further particularly advantageous embodiment, in response to determining that the given record of measurement data is not in the domain and/or distribution of the training examples, a candidate remedial procedure for a problem and/or deficiency that may affect the given record of measurement data may be applied to this record of measurement data. This creates a modified record of measurement data. The method is then repeated with the same machine learning model, but with the modified record of measurement data. If it then turns out that the modified record of measurement data is in the domain and/or distribution of the training examples, it can be determined that the given input record of measurement data is affected with the problem and/or deficiency remedied by the candidate remedial procedure. That is, by testing a plurality of such candidate remedial procedures, the root cause of a problem with the measurement process may be identified. The remedial procedure may then be used as a temporary solution until there is an opportunity to physically fix the problem, e.g., by replacing, re-calibrating or cleaning a sensor. For images as records of measurement data, the problem may, for example, be a dirty camera, a defocus of the image, motion blur, noise, or inadequate exposure.

As discussed before, in a further particularly advantageous embodiment, input records of measurement data that have been captured by at least one sensor carried on board a vehicle or robot may be chosen. Because vehicles and robots move, they are particularly prone to encountering situations that are no longer covered by the original training of the trained machine learning model.

In a further particularly advantageous embodiment, the training styles, and/or an aggregate thereof, are determined on an external computing system outside the vehicle or robot and transmitted to the vehicle or robot. The remaining steps of the method are performed on board the vehicle. In this manner, a lot of communication bandwidth is saved because it is not necessary to transmit the complete set of training examples to the vehicle or robot. Furthermore, in many applications, it is not desirable to have the training examples (or something from which these training examples might be recovered) on the vehicle or robot that is in the hands of an end user. The manufacturer of the vehicle or robot may not want to give away this information to the end user because in the hands of a third party, this information might facilitate the training of a machine learning model by this third party.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

Description of the Figures

The Figures show:

Figure 1 Exemplary embodiment of the method 100 for detecting whether a given input record 2 of measurement data that is inputted to a trained machine learning model 1 is in the domain and/or distribution 2a# of training examples 2a with which the machine learning model 1 was trained;

Figure 2 Exemplary determination of training styles 4a and test styles 4 with an encoder 12 of a StyleGAN network;

Figure 3 Exemplary rating of test styles 4, 4' by distance D, D' to an aggregate 4a* of training styles 4a;

Figure 4 Exemplary rating of test styles 4, 4' by retrieving local densities 4c from a localized flow model 4.

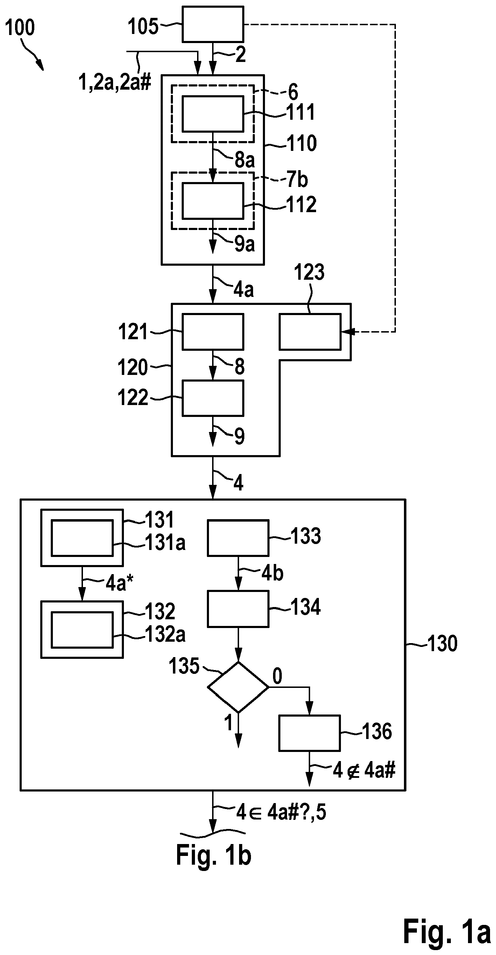

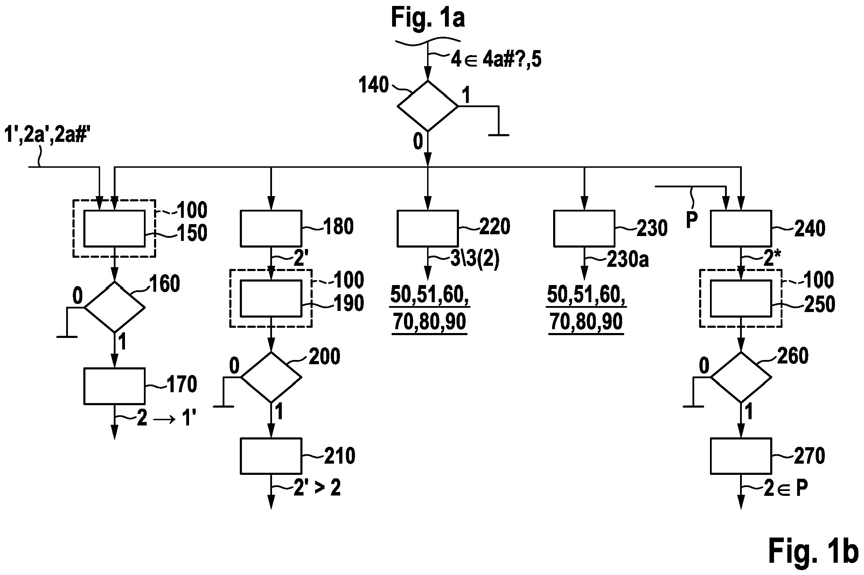

Figure 1 is a schematic flow chart of an embodiment of the method 100 for detecting whether a given input record 2 of measurement data that is inputted to a trained machine learning model 1 is in the domain and/or distribution 2a# of training examples 2a with which the machine learning model 1 was trained. The method starts from a given learning model 1 and a given input record 2 of measurement data. It is assumed that the training examples 2a forming a distribution 2a# are available as well.

In step 110, a training style 4a is determined from each training example 2a. This training style 4a characterizes the domain and/or distribution 2a# to which the training example 2a belongs.

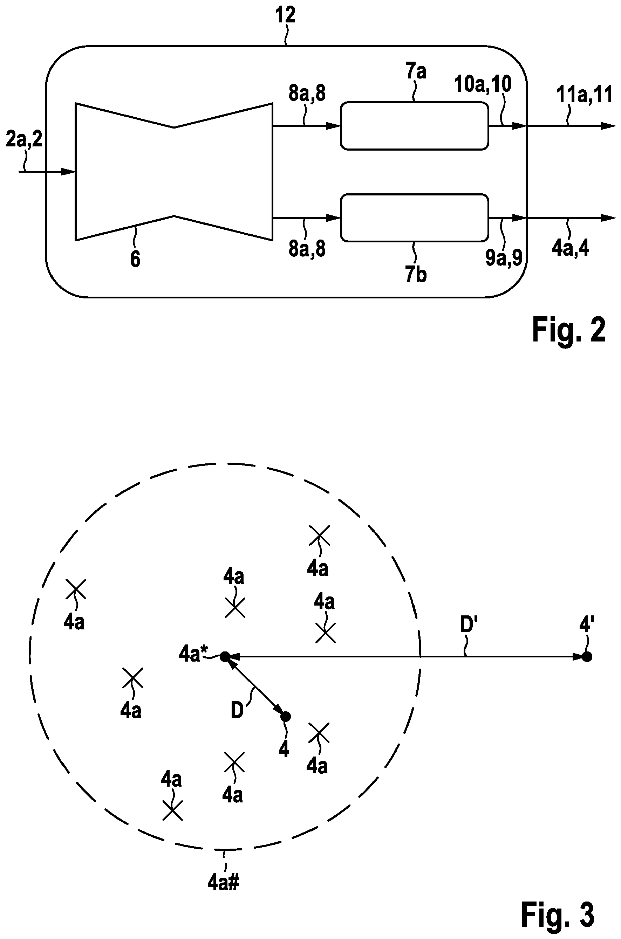

According to block 111, a trained feature extractor network 6 may process the training example 2a into a feature map 8a. According to block 112, from this feature map 8a, features 9a of the training example 2a that characterize the domain and/or distribution 2a# of the training example 2a may then be determined. For example, a map-to-style network 7b may be used for this. The extracted features 9a form the training style 4a. See Figure 2 for a further illustration.

In step 120, a test style 4 is determined from the given input record 2 of measurement data. This test style 4 characterizes the domain and/or distribution to which the given record 2 of measurement data belongs.

According to block 121, a trained feature extractor network 6 may process the input record 2 of measurement data into a feature map 8. According to block 122, from this feature map 8, features 9 of the input record 2 that characterize the domain and/or distribution of this record 2 may then be determined. For example, a map-to-style network 7b may be used for this. The extracted features 9 form the test style 4. In particular, the same feature extractor network 6 and the same map-to-style network 7b may be used for determining the training styles 4a and for determining the test style 4.

In step 130, based on the training styles 4a and the test style 4, it is evaluated to which extent 5 the test style 4 is a member of the distribution 4a# of the training styles 4a.

According to block 131, the training styles 4a may be aggregated to form an aggregate 4a*. For example, according to block 131a, this aggregate 4a* may comprise a parametrized statistical distribution that is fitted to the training styles 4a, and/or a centroid of a cluster of training styles 4a.

According to block 132, it may then be determined to which extent 5 the test style 4 is a member of the distribution of the training styles 4a of the training examples 2a based on a distance D, D' between the test style 4 and the aggregate 4a*, and/or based on the value of a rating function R(D, D') that is dependent on the distance D, D'. For example, according to block 132a, the Mahalanobis distance may be chosen as a measure for the distance.

According to block 133, based on the training styles 4a, a normalizing flow model 4b may be trained for probabilistic modelling and/or density estimation of the training styles 4a. According to block 134, this normalizing flow model 4b may be queried, based on the test style 4, for a local density 4c. According to block 135, it may then be checked whether this local density 4c qualifies as a high density with respect to a predetermined criterion. If this is not the case (truth value 0), the local density 4c is considered to be a low density. According to block 136, it may then be determined that the test style 4 is not in the domain and/or distribution 4a# of the training styles 4a.

In step 140, based at least in part on the extent 5 to which the test style 4 is a member of the distribution 4a# of training styles 4a, it is determined whether the given 2 record of measurement data is in the domain and/or distribution 2a# of the training examples 2a. If this is not the case (truth value 0), a wide range of actions may be performed. Some exemplary actions are shown in Figure 1.

In step 150, the method 100 may be repeated with the same given input record (2) of measurement data, but with a second machine learning model (1') that has been trained on a second dataset of training examples 2a' forming a distribution 2a#'. It may then be checked in step 160 whether the given input record 2 of measurement data is in the domain and/or distribution

2a#' of the training examples 2a' in the second dataset. If this is the case (truth value 1), in step 170, it may be determined that the second machine learning model 1' is more appropriate for processing the given input record 2 of measurement data than the previous machine learning model 1.

In step 180, a new record 2' of measurement data may be obtained from a sensor that is different from the sensor with which the given input record 2 of measurement data was acquired. In step 190, the method 100 may then be repeated with the same machine learning model 1, but with the new record 2' of measurement data. It may then be checked in step 200 whether the new record 2' of measurement data is in the domain and/or distribution 2a# of the training examples 2. If this is the case (truth value 1), in step 210, it may be determined that the new record 2' of measurement data is more credible than the given record 2 of measurement data.

In step 220, the transmission of an output 3 that the machine learning model 1 computes from the given record 2 of measurement data to a downstream technical system 50, 51, 60, 70, 80, 90 may be suppressed. That is, the technical system 50, 51, 60, 70, 80, 90 is getting outputs 3 with the exception of those originating from a given record 2 of measurement data that has been found not to be in the domain and/or distribution 2a# of the training examples 2a. Examples of downstream technical systems are a vehicle 50, a robot 51, a driving assistance system 60, a surveillance system 70, a quality inspection system 80, and a medical imaging system 90.

In step 230, a downstream technical system 50, 51, 60, 70, 80, 90 that uses outputs 3 of the machine learning model 1 to move this technical system 50, 51, 60, 70, 80, 90 into an operational state where it can better tolerate noisy or incorrect outputs 3. For example, this may be performed by providing an actuation signal 230a to the technical system 50, 51, 60, 70, 80, 90.

In step 240, a candidate remedial procedure for a problem and/or deficiency P that may affect the given record 2 of measurement data may be applied to this given record 2 of measurement data, thereby creating a modified record 2* of measurement data. In step 250, the method 100 may then be repeated with the same machine learning model 1, but with the modified record 2* of measurement data. It may then be checked in step 260 whether the modified record 2* of measurement data is in the domain and/or distribution 2a# of the training examples 2a. If this is the case (truth value 270), it may then be determined that the given input record 2 of measurement data is affected with the problem and/or deficiency P remedied by the candidate remedial procedure.

Optionally, in step 105, input records 2 of measurement data that have been captured by at least one sensor carried on board a vehicle 50 or robot 51 may be chosen. Then, according to block 123, the training styles 4a, and/or an aggregate 4a* thereof, may be determined 123 on an external computing system outside the vehicle 50 or robot 51 and transmitted to the vehicle 50 or robot 51.

Figure 2 illustrates an exemplary way of obtaining training styles 4a and test styles 4. Given training examples 2a, a feature extractor 6 produces feature maps 8a. A map-to-style network 7b processes these feature maps 8a into features 9a of the training example 2a that characterize the domain and/or distribution 2a# of the training example 2a. From these features 9a, the training style 4 is formed. Likewise, given the input record 2 of measurement data, the feature extractor 6 produces feature maps 8. The map-to-style network 7b processes the feature maps 8 into features 9 of the input record 2 of measurement data that characterize the domain and/or distribution of the record 2 of measurement data. From these features 9, the test style 4 is formed.

In the example shown in Figure 2, the feature extractor 6 and the map-to-style network 7b are part of an encoder 12 for a StyleGAN network that is to generate style-mixed images. This encoder 12 further comprises a map-to-content network 7a that is configured to create, from the feature maps 8a, 8, features 10a, 10 that relate to the content of the training example 2a, respectively of the input record 2 of measurement data, in their respective domains. From this, a content 11a, 11 of the training example 2a, respectively of the input record 2 of measurement data, is formed.

Figure 3 illustrates an exemplary way of determining to which extent 5 the test style 4 is a member of the distribution 4a# of the training styles 4a. The training styles, of which only a few are exemplarily shown in Figure 3, are aggregated into a cluster with a centroid 4a* as the aggregate. Test styles 4 and 4' are then evaluated by computing the respective distance D, D' to the centroid 4a*. In the example shown in Figure 3, the test style 4 is within the distribution 4a# of the training styles 4a because it is close to the centroid 4a*. But the test style 4' is far away from the centroid 4a* and therefore deemed to be outside the distribution 4a#. The extent 5 may be discretized to binary values 0 and 1 by comparing the distances D, D' to a predetermined threshold: a distance D, D' equal to or below the threshold means in-distribution (1), a larger distance means out-of-distribution (0). However, this is not strictly required. Rather, the extent 5 can also assume intermediate values, so as to avoid discretization artifacts.

Note that the illustration in Figure 3 is drawn in two dimensions only for legibility. In real applications, the training styles 4a and the test style 4 will be much more multivariate.

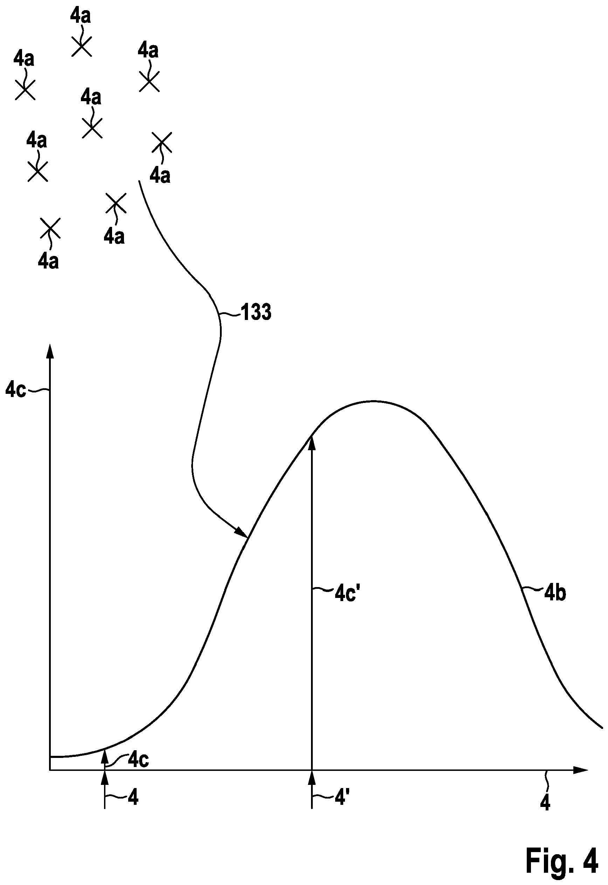

Figure 4 illustrates another exemplary way of determining to which extent 5 the test style 4 is a member of the distribution 4a# of the training styles 4a. Here, a normalizing flow model 4b for probabilistic modelling and/or density estimation of the training styles 4a is trained based on the training styles 4a, according to block 133 of the method 100. In Figure 4, this normalizing flow model 4b is illustrated as a simple function that takes in a style 4 and outputs a local density value 4c. In real applications, the normalizing flow model 4b will be much more multivariate.

In the example shown in Figure 4, the normalizing flow model 4b is queried for two test styles 4 and 4'. For the test style 4, the corresponding local density value 4c is in a low-density region of the normalizing flow model 4b. It is therefore determined that the test style 4 is not in the domain and/or distribution 4a# of the training styles 4a. By contrast, for the test style 4', a high local density 4c is returned. Therefore, this test style 4' is in-distribution.

**Claims**

1. A method (100) for detecting whether a given input record (2) of measurement data that is inputted to a trained machine learning model (1) is in the domain and/or distribution (2a#) of training examples (2a) with which the machine learning model (1) was trained, comprising the steps of:

   • determining (110), from each training example (2a), a training style (4a) that characterizes the domain and/or distribution (2a#) to which the training example (2a) belongs;
   • determining (120), from the given input record (2) of measurement data, a test style (4) that characterizes the domain and/or distribution to which the given record (2) of measurement data belongs;
   • evaluating (130), based on the training styles (4a) and the test style (4), to which extent (5) the test style (4) is a member of the distribution (4a#) of the training styles (4a); and
   • based at least in part on the outcome (5) of this evaluation, determining (140) whether the given (2) record of measurement data is in the domain and/or distribution (2a#) of the training examples (2a).

2. The method (100) of claim 1, wherein the determining (110, 120) of the training style (4a), respectively of the test style (4), comprises:

   • processing (111, 121), by a trained feature extractor network (6), the training example (2a), respectively the input record (2) of measurement data, into a feature map (8a, 8); and
   • determining (112, 122), from this feature map (8a, 8), features (9a, 9) of the training example (2a), respectively of the input record (2), that characterize the domain and/or distribution (2a#) of the training example (2a), respectively of the input record (2).

3. The method (100) of any one of claims 1 to 2, wherein the evaluating (130) comprises:

   • aggregating (131) the training styles (4a) to form an aggregate (4a*); and
   • determining (132) to which extent (5) the test style (4) is a member of the distribution of the training styles (4a) of the training examples (2a) based on a distance D, D' between the test style (4) and the aggregate (4a*), and/or based on the value of a rating function R(D, D') that is dependent on the distance D, D'.

4. The method (100) of claim 3, wherein the aggregate (4a*) comprises (131a) a parametrized statistical distribution that is fitted to the training styles (4a), and/or a centroid of a cluster of training styles (4a).

5. The method (100) of any one of claims 3 to 4, wherein the Mahalanobis distance is chosen (132a) as a measure for the distance D, D'.

6. The method (100) of any one of claims 1 to 5, wherein the evaluating (130) comprises:

   • training (133), based on the training styles (4a), a normalizing flow model (4b) for probabilistic modelling and/or density estimation of the training styles (4a);
   • querying (134), based on the test style (4), the normalizing flow model (4b) for a local density (4c); and
   • in response to determining (135) that, according to a predetermined criterion, this local density (4c) is in a low-density region, determining (136) that the test style (4) is not in the domain and/or distribution (4a#) of the training styles (4a).

7. The method (100) of any one of claims 1 to 6, further comprising, in response to determining (140) that the given record (2) of measurement data is not in the domain and/or distribution (2a#) of the training examples (2a),

   • repeating (150) the method (100) with the same given input record (2) of measurement data, but with a second machine learning model (1') that has been trained on a second dataset of training examples (2a'); and
   • in response to determining (160) that the given input record (2) of measurement data is in the domain and/or distribution (2a#') of the training examples (2a') in the second dataset, determining (170) that the second machine learning model (1') is more appropriate for processing the given input record (2) of measurement data than the previous machine learning model (1).

8. The method (100) of any one of claims 1 to 7, further comprising, in response to determining (140) that the given record (2) of measurement data is not in the domain and/or distribution (2a#) of the training examples (2a),

> • obtaining (180) a new record (2') of measurement data from a sensor that is different from the sensor with which the given input record (2) of measurement data was acquired;
> • repeating (190) the method (100) with the same machine learning model (1), but with the new record (2') of measurement data; and
> • in response to determining (200) that the new record (2') of measurement data is in the domain and/or distribution (2a#) of the training examples (2), determining (210) that the new record (2') of measurement data is more credible than the given record (2) of measurement data.

9. The method (100) of any one of claims 1 to 8, further comprising, in response to determining (140) that the given record (2) of measurement data is not in the domain and/or distribution (2a#) of the training examples (2a),

> • suppressing (220) the transmission of an output (3) that the machine learning model (1) computes from the given record (2) of measurement data to a downstream technical system (50, 51, 60, 70, 80, 90); and/or
> • actuating (230) a downstream technical system (50, 51, 60, 70, 80, 90) that uses outputs (3) of the machine learning model (1) to move this technical system (50, 51, 60, 70, 80, 90) into an operational state where it can better tolerate noisy or incorrect outputs (3).

10. The method (100) of any one of claims 1 to 9, further comprising, in response to determining (140) that the given record of measurement data is not in the domain and/or distribution of the training examples,

> • applying (240), to the given record (2) of measurement data, a candidate remedial procedure for a problem and/or deficiency (P) that may affect the given record (2) of measurement data, thereby creating a modified record (2*) of measurement data;
> • repeating (250) the method (100) with the same machine learning model (1), but with the modified record (2*) of measurement data; and
> • in response to determining (260) that the modified record (2*) of measurement data is in the domain and/or distribution (2a#) of the training examples (2a), determining (270) that the given input record (2) of measurement data is affected with the problem and/or deficiency (P) remedied by the candidate remedial procedure.

11. The method (100) of any one of claims 1 to 10, wherein input records (2) of measurement data that have been captured by at least one sensor carried on board a vehicle (50) or robot (51) are chosen (105).

12. The method (100) of claim 11, wherein

> • the training styles (4a), and/or an aggregate (4a*) thereof, are determined (123) on an external computing system outside the vehicle (50) or robot (51) and transmitted to the vehicle (50) or robot (51); and
> • the remaining steps of the method (100) are performed on board the vehicle (50) or robot (51).

13. A computer program, comprising machine-readable instructions that, when executed on one or more computers and/or compute instances, cause the one or more computers and/or compute instances to perform a method (100, 200) of any one of claims 1 to 12.

14. A non-transitory machine-readable data carrier and/or a download product with the computer program of claim 13.

15. One or more computers with the computer program of claim 13, and/or with the non-transitory machine-readable data carrier and/or download product of claim 14.

Fig. 1b

Fig. 1a

EP 4 428 762 A1

Fig. 1b

12

Fig. 2

Fig. 3

Fig. 4

Europäisches
Patentamt

European
Patent Office

Office européen
des brevets

**EUROPEAN SEARCH REPORT**

Application Number

EP 23 16 0419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIMI SUMAIYA TABASSUM ET AL: "EARLIN: Early Out-of-Distribution Detection for Resource-Efficient Collaborative Inference", 10 September 2021 (2021-09-10), 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 635 - 651, XP047606928, [retrieved on 2021-09-10] * abstract; page 635 - page 645; figures 1,3 * | 1-15 | INV. G06N3/096 G06N7/01 |
| A | KIMIN LEE ET AL: "A Simple Unified Framework for Detecting Out-of-Distribution Samples and Adversarial Attacks", ARXIV.ORG, CORNELL UNIVERSITY LIBRARY, 201 OLIN LIBRARY CORNELL UNIVERSITY ITHACA, NY 14853, 11 July 2018 (2018-07-11), XP081246412, * abstract * | 5 | |
| A | HUANG CHENGJIE ET AL: "Out-of-Distribution Detection for LiDAR-based 3D Object Detection", 2022 IEEE 25TH INTERNATIONAL CONFERENCE ON INTELLIGENT TRANSPORTATION SYSTEMS (ITSC), IEEE, 8 October 2022 (2022-10-08), pages 4265-4271, XP034217022, DOI: 10.1109/ITSC55140.2022.9922026 [retrieved on 2022-11-01] * page 4265 - page 4268 * | 1-15 | TECHNICAL FIELDS SEARCHED (IPC) G06N |
| A | EP 3 869 401 A1 (KONINKLIJKE PHILIPS NV [NL]) 25 August 2021 (2021-08-25) * paragraph [0023] * | 7 | |

-/--

The present search report has been drawn up for all claims

| Place of search | Date of completion of the search | Examiner |
|---|---|---|
| The Hague | 27 July 2023 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 16 0419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/226790 A1 (ALVAREZ IGNACIO [US] ET AL) 16 July 2020 (2020-07-16) * paragraphs [0027], [0060], [0142], [0145] * ----- | 8,11,12 | |
| A | WO 2022/078922 A1 (KONINKLIJKE PHILIPS NV [NL]) 21 April 2022 (2022-04-21) * page 22 – page 23 * ----- | 9,10 | |

**TECHNICAL FIELDS SEARCHED (IPC)**

The present search report has been drawn up for all claims

| Place of search | Date of completion of the search | Examiner |
|---|---|---|
| The Hague | 27 July 2023 | Nourestani, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 0419

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2023

| Patent document cited in search report | | Publication date | Patent family member(s) | | Publication date |
|---|---|---|---|---|---|
| EP 3869401 | A1 | 25-08-2021 | CN | 115136192 A | 30-09-2022 |
| | | | EP | 3869401 A1 | 25-08-2021 |
| | | | EP | 4107662 A1 | 28-12-2022 |
| | | | JP | 2023515367 A | 13-04-2023 |
| | | | WO | 2021165053 A1 | 26-08-2021 |
| US 2020226790 | A1 | 16-07-2020 | CN | 113514078 A | 19-10-2021 |
| | | | EP | 3885792 A1 | 29-09-2021 |
| | | | US | 2020226790 A1 | 16-07-2020 |
| WO 2022078922 | A1 | 21-04-2022 | CN | 116368520 A | 30-06-2023 |
| | | | EP | 4229548 A1 | 23-08-2023 |
| | | | WO | 2022078922 A1 | 21-04-2022 |

EPO FORM P0459

For more details about this annex : see Official Journal of the European Patent Office, No. 12/82